## Europäisches Patentamt

## European Patent Office

## Office européen des brevets

(19)

(11) **EP 0 545 184 B2**

(12) **NEUE EUROPÄISCHE PATENTSCHRIFT**

(45) Veröffentlichungstag und Bekanntmachung des Hinweises auf die Entscheidung über den Einspruch:
**04.03.1998 Patentblatt 1998/10**

(45) Hinweis auf die Patenterteilung:
**02.08.1995 Patentblatt 1995/31**

(21) Anmeldenummer: **92119865.1**

(22) Anmeldetag: **21.11.1992**

(51) Int. Cl.[6]: **C08F 293/00**, C08L 53/00,
C08F 297/00

(54) **Blockcopolymere aus Acrylat- und Methacrylateinheiten**

Block copolymers based on acrylate and methacrylate units

Copolymères séquencés à base d'unités acryliques et méthacryliques

(84) Benannte Vertragsstaaten:
**BE DE FR GB NL**

(30) Priorität: **04.12.1991 DE 4139962**

(43) Veröffentlichungstag der Anmeldung:
**09.06.1993 Patentblatt 1993/23**

(73) Patentinhaber:
**BASF Aktiengesellschaft**
**67063 Ludwigshafen (DE)**

(72) Erfinder:
• **Niessner, Norbert, Dr.**
  **W-6701 Friedelsheim (DE)**
• **Seitz, Friedrich, Dr.**
  **W-6701 Friedelsheim (DE)**

(56) Entgegenhaltungen:
| | |
|---|---|
| **EP-A- 0 243 120** | **EP-A- 0 248 596** |
| **EP-A- 0 323 181** | **EP-A- 0 329 873** |
| **EP-A- 0 349 270** | **EP-A- 0 402 219** |
| **EP-A- 0 408 420** | **EP-A- 0 408 429** |
| **EP-A- 0 442 804** | **WO-A-88/06603** |

• **JOURNAL OF APPLIED POLYMER SCIENCE Bd. 26, Nr. 9 , September 1981 , NEW YORK, USA Seiten 3103 - 3115 BINNUR Z. GUNESIN 'BLOCK COPOLYMERS OBTAINED BY FREE RADICAL MECHANISM. II. BUTYL ACRYLATE AND METHYL METHACRYLATE'**
• **POLYM.PREPR. (Am. Chem. Soc., Div. Polym.Che,.), 1988, 29(2), pp. 52-53**

**Beschreibung**

Während Blockcopolymere z.B. von Styrol und Butadien mit idealer Blockstruktur durch anionische Polymerisation problemlos erhalten werden und technische Bedeutung erlangt haben (besonders in Form von sogenannten Sternblockcopolymeren) sind von Acrylsäureestern und Methacrylsäureestern solche Makromoleküle bisher nicht bekannt.

Lediglich Quasi-Blockcopolymere aus Butylacrylat einerseits und Methylmethacrylat andererseits haben Piirma und Gunesin (Polym. Prepr. 18, 687 (1977) auf radikalischem Wege erhalten.

An sich existiert in der sog. Gruppentransferpolymerisation (GTP) eine Methode, Blockcopolymere auch von Acryl- oder Methacrylsäureestern herzustellen.

Bisher sind allerdings nur Blockcopolymere von verschiedenen Acrylestern einerseits und von Methacrylsäureestern andererseits, d.h. jeweils innerhalb dieser Gruppen, hergestellt worden, (Yu, Choi, Lim, Choi in Macromolecules 21, 2893 (1988) bzw. Sogah et al. Macromolecules 20, 1473 (1987)).

Die Möglichkeit zur Herstellung solcher Blockcopolymerer bietet die unterschiedliche Reaktivität von Acrylaten und Methacrylaten. Hertler et al. beschreiben aber in Macromolecules $\underline{17}$, 1417 [1984], daß mit ein und demselben Katalysator es nicht möglich ist, Blockcopolymere von Methylmethacrylat und n-Butylacrylat mit einer molekularen Uneinheitlichkeit $M_w/M_n$ von weniger als 2 herzustellen.

Ein Sternblockcopolymer aus Methylmethacrylat und tert-Butylacrylat beschreiben Ph. Teyssie et al. (Polym. Preprints 32(1), 299 (1991).

Es wurde nun gefunden, daß lineare, sternförmige und dendrimere Blockcopolymere (A) aus mindestens je einem bestimmten Alkylacrylat und mindestens je einem Alkylmethacrylat eines linearen $C_1$-$C_8$-Alkohols für viele Verwendungszwecke günstige Eigenschaften besitzen; sie können mit Hilfe der GTP-Methode leicht erhalten werden. Die Gruppentransferpolymerisation ist z.B. beschrieben bei O.W. Webster, W.R. Hertler, D.Y. Sogah, W.B. Farnham, T.V. Rajan Babu; J. Am. Chem. Soc. $\underline{105}$, 5706 [1983].

Hierbei wird ein Methacrylat (z.B. Methylmethacrylat) mit beispielsweise Dimethylketenmethyltrimethylsilylacetal als Initiator in Gegenwart von Katalysatoren, beispielsweise Bifluoriden, polymerisiert. Dabei wird die Trimethylsilylgruppe des wachsenden Kettenendes auf jede neu angelagerte Monomereinheit übertragen. Es werden enge Molekulargewichtsverteilungen erhalten.

Ein wichtiges Anwendungsgebiet für die erfindungsgemäßen Blockcopolymeren ist die Herstellung transparenter Mischungen mit Polymerisaten von Styrol oder (Meth)acrylaten und deren Copolymeren, z.B. untereinander oder mit Acryl- oder Methacrylnitril oder Maleinimidmonomeren.

Unmittelbarer Gegenstand der Erfindung ist daher ein lineares, sternförmiges oder dendrimeres Blockcopolymer A, aufgebaut aus

A1: 10 bis 90 Gew.-% mindestens eines Blocks aus einem oder mehreren Acrylsäureestern mit einem linearen aliphatischen Alkohol mit 1 bis 8 C-Atomen sowie 2-Ethylhexylalkohol oder einem Alkohol mit einem aromatischen Rest, ausgewählt aus 2-Phenoxyethanol, Phenylethanol, Phenylbutanol und Benzylalkohol und

A2: 10 bis 90 Gew.-% mindestens eines Blocks aus einem oder mehreren Methacrylsäureestern mit einem Alkohol mit 1 bis 8 C-Atomen,

wobei jeder Block ein mittleres Molekulargewicht $M_n$ (Zahlenmittel) von 1000 bis 100.000 g/mol besitzt und der Quotient $M_w/M_n$ (Gewichtsmittel/Zahlenmittel) jedes Blocks kleiner als 2 ist,
wie es durch Blockcopolymerisation nach dem Verfahren der Gruppentransferpolymerisation erhalten wird.
Ein weiterer Gegenstand der Erfindung sind Formmassen, nämlich Mischungen des vorgenannten Blockcopolymerisats A mit weiteren Copolymeren B und eventuell einer dritten Komponente C, d.h. Formmassen enthaltend, bezogen auf die Summe aus A, B und gegebenenfalls C:

A: 1 bis 99 Gew.-% eines Blockcopolymeren A,

B: 1 bis 99 Gew.-% eines Copolymeren B, aufgebaut aus 50 bis 95 Gew.-% Styrol, substituierten Styrols oder (Meth)acrylsäure-($C_1$-$C_8$)-esters und 5 bis 50 Gew.-% mindestens eines weiteren Monomeren, ausgewählt aus der Gruppe, die umfaßt Acrylnitril, Methacrylnitril, N-alkyl- oder -arylsubstituiertes Maleinimid, Maleinsäureanhydrid, Acrylsäure und Acrylamid
und gegebenenfalls

C: bis 98 Gew.-% eines Copolymeren oder Pfropfcopolymeren C aus, bezogen auf die Summe aus C1 und C2,

C1: 50 bis 100 Gew.-% eines Acrylatkautschuks C1

C2: bis 50 Gew.-% einer oder mehrerer gegebenenfalls auf C1 gepfropften Hüllen aus

C21: 35 bis 75 Gew.-% Styrol, eines substituierten Styrols oder eines (Meth)acrylsäureesters und

C22: 25 bis 65 Gew.-% Acrylnitril, Methacrylnitril, eines N-alkyl- oder -arylsubstituierten Maleinimids, Maleinsäureanhydrid, Acrylsäure, Acrylamid oder eines (Meth)acrylsäureesters.

Die Erfindung umfaßt auch ein Verfahren zur Herstellung von Blockcopolymerisaten A der vorstehend beschriebenen Art, wobei ein oder mehrere Acrylsäureester A1 und ein oder mehrere Methacrylsäureester A2 nacheinander in an sich bekannter Weise der Gruppentransferpolymerisation unterworfen werden.

Zu den erfindungsgemäßen Blockcopolymerisaten A und deren Mischungspartnern ist im einzelnen das folgende zu sagen:

Copolymerisate A

Als Copolymerisat A können die erfindungsgemäße Formmassen 1 bis 99 Gew.-%, vorzugsweise 20 bis 90 Gew.-% mindestens eines Blockcopolymeren enthalten, welches aufgebaut ist aus 10 bis 90 Gew.-%, vorzugsweise 20 bis 80 Gew.-% mindestens eines Acrylat-Blocks und 10 bis 90 Gew.-%, vorzugsweise 20 bis 80 Gew.-% mindestens eines weiteren Blocks aus Methacrylat-Einheiten, wobei jeder Block ein mittleres Molekulargewicht $M_n$ (Zahlenmittel) von 1.000 bis 100.000, vorzugsweise 2.000 bis 80.000, besitzt, und der Quotient $M_w/M_n$ (Gewichtsmittel/Zahlenmittel) eines jeden Blocks kleiner als 2 ist.

Die Blockcopolymeren können linear aufgebaut sein, beispielsweise nach dem Muster
A1-A2, A1-A2-A1, A1-A2-A1, $(A1-A2)_n$,
aber auch sternförmig, wie z.B.
$A1(A2)_n$, $A1(A2)_n$, $(A1)_n-A2-A1-(A2)_m$ (Rekursionstiefe 1)
oder dendrimer, wie z.B.
$((A1)_n-A2)_mA1$, $((A2)_n-A1)_mA2$ (Rekursionstiefe 2),
$((A1)_m-A2)_nA1)_pA2$, $((A2)_m-A1)_nA2)_pA1$ (Rekursionstiefe 3),
oder kammförmig, wie z.B.
$(Al_n-A1(A2))_q$, $(A2_n-A2(B1))_q$
wobei A1 einen Acrylatblock, A2 einen Methacrylatblock, m, n, p = jeweils eine ganze Zahl zwischen 1 und 3 und q = ganze Zahl zwischen 0 und 1.000 bedeuten und im Falle der dendrimeren Blockcopolymeren die Rekursionstiefe bis zu 10 betragen kann.

Geeignete Acrylate zur Bildung des Acrylatblocks sind $C_1$-$C_8$-Alkylacrylate, beispielsweise Methylacrylat, Ethylacrylat, n-Butylacrylat, 2-Ethylhexylacrylat. Bevorzugt sind n-Butylacrylat und 2-Ethylhexylacrylat. Geeignet sind ferner Acrylate mit aromatischen Resten, nämlich 2-Phenoxyethylacrylat, Phenylmethylacrylat, Phenylethylacrylat, Phenylbutylacrylat, Benzylacrylat.

Geeignete Methacrylate zur Bildung des Methacrylatblocks sind alle aliphatischen $C_1$-$C_8$-Methacrylate, wie Methylmethacrylat, Ethylmethacrylat, Butylmethacrylat, und insbesondere das Methylmethacrylat, aber auch Methacrylate mit aromatischen Einheiten, wie das Phenylmethacrylat.

Die erfindungsgemäßen Blockcopolymeren A werden nach der Methode der Gruppentransferpolymerisation (GTP) hergestellt.

Die GTP erlaubt - ähnlich wie die anionische Polymerisation - die kontrollierte Herstellung von Polymeren, insbesondere der Acrylate oder Methacrylate, mit definierten W. Scholtan und H. Lange, Kolloid-Z. und Z. Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die aus der integralen Massenverteilung bestimmten $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bis 90 Gew.-% der Teilchen bezogen sind. Der Quotient Q

$$\frac{d_{90} - d_{10}}{d_{50}} = Q$$

stellt ein Maß für die Verteilungsbreite der Teilchengröße dar.

Die erfindungsgemäßen Pfropfmischpolymerisate C werden in bekannter Weise erhalten. Als Pfropfgrundlage C1 dienen kautschukelastische vernetzte Acrylsäureester-Polymerisate entsprechender Art mit einer Glasübergangstemperatur von unter 0°C. Die vernetzten Acrylsäureester-Polymerisaten sollen vorzugsweise eine Glastemperatur unter -20° C, insbesondere unter -30° C, besitzen. Die Glasübergangstemperatur der Acrylsäureester-Polymerisate kann z.B. nach der DSC-Methode (K.H. Illers, Makromol. Chemie 127 (1969), S. 1) bestimmt werden. Geeignete Monomere sind Acrylsäurealkylester mit 2 bis 8 Kohlenstoffatomen, vorzugsweise mit 4 bis 8 Kohlenstoffatomen, im Alkylrest. Acrylsäure-n-butylester und Acrylsäureethylhexylester sind besonders geeignet. Die Monomeren können jeweils allein oder auch in Mischung miteinander eingesetzt werden. In dem Fall, in den die Pfropfgrundlage C1 die alleinige Komponente C ist, wirken die erfindungsgemäßen Blockcopolymeren A als "Verträglichkeitsvermittler" zwischen C1 und den thermoplastischen Polymeren B.

Um vernetzte Acrylsäureester-Polymerisate zu erhalten, wird die Polymerisation in Gegenwart von 0,5 bis 10 Gew.-%, vorzugsweise 1 bis 5 Gew.-%, bezogen auf die bei der Herstellung der Pfropfgrundlage eingesetzten gesamten Monomeren, eines copolymerisierbaren, mehrfunktionellen, die Vernetzung bewirkenden Monomeren durchgeführt. Als solche mehrfunktionellen Vernetzungs-Monomeren eignen sich Monomere, die vorzugsweise zwei, gegebenenfalls auch mehr zur Copolymerisation befähigte ethylenische Doppelbindungen enthalten, die nicht in 1,3-Stellung konjugiert sind. Geeignete Monomere sind beispielsweise Divinylbenzol, Diallylmaleat, Diallylfumarat oder Diallylphthalat. Als besonders günstig hat sich der Acrylsäureester des Tricyclodecenylalkohols erwiesen (vgl. DE-PS 1 260 935, die auch für die nachstehend beschriebene Herstellung Hinweise gibt).

Zunächst wird die Pfropfgrundlage C1 hergestellt, indem der oder die Acrylsäureester und das vernetzende Monomere, gegebenenfalls zusammen mit weiteren Comonomeren, in wäßriger Emulsion in an sich bekannter Weise polymerisiert werden. Es werden die üblichen Emulgatoren, in Mengen von 0,5 bis 5 Gew.-%, bezogen auf die Monomeren, verwendet. Vorzugsweise nimmt man die Natriumsalze von Alkylsulfonaten oder Fettsäuren mit 10 bis 18 Kohlenstoffatomen. Im allgemeinen wird bei einem Wasser- zu Monomerenverhältnis von 2:1 bis 0,7:1 gearbeitet. Als Polymerisationsinitiatoren dienen die gebräuchlichen Persulfate, wie z.B. Kaliumpersulfat, es können jedoch auch Redox-Systeme zum Einsatz gelangen. Als weitere Polymerisationshilfsstoffe können die üblichen Puffersubstanzen und evtl. Molekulargewichtsregler wie Mercaptane, Terpinole oder dimeres $\alpha$-Methylstyrol verwendet werden.

Die genauen Polymerisationsbedingungen' insbesondere Art, Dosierung und Menge des Emulgators, werden so gewählt, daß der erhaltene Latex einen $d_{50}$-Wert im Bereich von etwa 50 bis 1500 nm, vorzugsweise im Bereich von 80 bis 1000 nm besitzt. Die Teilchengrößen-Verteilung des Latex soll dabei vorzugsweise eng sein. Der Quotient Q = ($d_{90}$ - $d_{10}$)/$d_{50}$ soll kleiner als 0,5, möglichst kleiner als 0,35 sein. Dies erreicht man z.B. dadurch, daß man während der Polymerisation für eine konstante Konzentration von Monomeren und Emulgator sorgt und eine konstante Temperatur einhält.

Zur Herstellung des Pfropfmischpolymerisats C wird dann die vinylaromatische Verbindung, also Styrol, $\alpha$-Methylstyrol oder kernalkyliertes Styrol, oder das Alkyl(meth)acrylat und das oder die copolymerisierbaren, ethylenisch ungesättigten Monomeren, also (Meth)-Acrylnitril, (Meth)acrylsäurealkylester mit 1 bis 8 Kohlenstoffatomen im Alkylrest, Acrylsäure, Maleinsäureanhydrid, Acrylamid, mit $C_1$-$C_8$-Alkyl- oder $C_6$-$C_{20}$-Aryl N-subst. Maleinimid vorteilhaft wieder in wäßriger Emulsion auf die als Latex (d.h. Emulsion) vorliegende Pfropfgrundlage aufpolymerisiert. Die Pfropfmischpolymerisation kann im gleichen System erfolgen wie die Emulsionspolymerisation zur Herstellung der Pfropfgrundlage, wobei, falls notwendig, weiterer Emulgator und Initiator zugegeben werden kann. Das aufzupropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 25 bis 65 Gew.-%, vorzugsweise von 30 bis 40 Gew.-%, im Pfropfmischpolymerisat C resultiert. Da die Pfropfausbeute bei der Pfropfmischpolymerisation nicht 100 % ist, muß eine etwas größere Menge des Monomerengemisches bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats C kann beispielsweise durch die Dosiergeschwindigkeit der Monomeren oder durch Reglerzugabe erfolgen (Chauvel, Daniel, ACS Polymer Preprints 15 (1974) Seite 329ff). Der Anteil des Pfropfmischpolymerisats C in dem erhaltenen Polymerisationsprodukt wird wie beschrieben ermittelt.

Die Pfropfmischpolymerisation kann zweckmäßig im gleichen System wie die Emulsionspolymerisation zur Herstellung der Pfropfgrundlage C, vorgenommen werden; dabei kann weiterer Emulgator und Initiator zugegeben werden. Das aufzupfropfende Monomere, d.h. insbesondere Styrol, kann dem Reaktionsgemisch auf einmal, absatzweise in mehreren Stufen oder vorzugsweise kontinuierlich während der Polymerisation zugegeben werden. Beispiele für Monomere zur Pfropfmischpolymerisation (Komponente $C_2$) sind bereits bei der Beschreibung der Komponente B genannt.

Die nachstehend angegebenen Molekulargewichte wurden durch Gelpermeationschromatographie (GPC) an vernetzten Polystyrol-Gelen mit Tetrahydrofuran als Eluent, einer theoretischen Bodenzahl von 25.000 und einem Einlinien-UV-Photometer (254 nm Wellenlänge) als Detektor ermittelt. Die Eichung erfolgte mit monodispersen Polystyrol-Proben. Die Methode ist beschrieben, z.B. in : G. Glöckner; Polymercharakterisierung durch Flüssigkeits-Chromatographie; Hüthig-Verlag 1980, S. 128 ff.

Beispiel A

Als Blockcopolymer A-1 wurde ein Poly(n-butylacrylat-blockmethylmethacrylat) eingesetzt, das folgendermaßen hergestellt wurde:

Unter Luft- und Feuchtigkeitsausschluß wurden in 60 ml Tetrahydrofuran 2,13 mmol 1-Methoxy-1-trimethylsilyloxy-2-methyl-1-propen und 5 mikromol Tris(dimethylamino)schwefeldifluorid (TASHF$_2$) vorgelegt, 18 g Methylmethacrylat innerhalb von 30 Minuten bei 20°C zugetropft, und anschließend auf 0°C gekühlt. Es wurde eine Probe (500 µl) gezogen, in Methanol ausgefällt und getrocknet. Die Probe wurde gelchromatographisch untersucht (Probe A). Eine Mischung aus 18 g n-Butylacrylat und 5 mikromol TASHF$_2$ wurde innerhalb von 30 Minuten zugetropft. Es wurde wiederum eine Probe (500 µl) gezogen, in Methanol ausgefällt und getrocknet. Die Probe wurde gelchromatographisch untersucht (Probe B). Die Reaktion wurde mit 1 ml Methanol abgebrochen. Ausbeute: 97 %.

| Gelchromatographisches Molekulargewicht (Bestimmt über GPC): | | | |
|---|---|---|---|
| | Methacrylat-block Probe A | Gesamt-Polymer Probe B | Acrylatblock*) Probe B-Probe A |
| Mn | = 14.800 | 23.000 | 8.200 |
| Mw | = 18.600 | 34.800 | 16.200 |
| Mw/Mn**) | = 1.26 | 1.51 | 1.98 |
| Molekulargewicht Probe B (berechnet): | | | |
| Mn | = 17.000 | | |
| Glasstufen (ermittelt über DSC: -42°C, 107°C | | | |

*) rechnerisch durch Subtraktion Probe B-Probe A
**) Uneinheitlichkeit

Copolymerisat B

Ein Copolymerisat aus Styrol und Acrylnitril im Gew.-Verhältnis 80:20 mit einer Viskositätszahl von 83 ml/g (gemessen in einer 0,5 gew.-%igen Lösung in Dimethylformamid bei 23° C), hergestellt durch kontinuierliche Lösungspolymerisation nach einem Verfahren wie es beispielsweise beschrieben ist im Kunststoff-Handbuch, Vieweg-Daumiller, Band V (Polystyrol), Carl-Hanser-Verlag, München 1969, Seite 124.

Die Bestandteile A und B wurden in trockener Form auf einem Fluidmischer gemischt und bei 260°C auf einem Doppelschnekkenextruder (ZSK 30 der Fa. Werner & Pfleiderer) extrudiert.

**Patentansprüche**

**1.** Lineares, sternförmiges oder dendrimeres Blockcopolymer A, aufgebaut aus

A1: 10 bis 90 Gew.-% mindestens eines Blocks aus einem oder mehreren Acrylsäureestern mit einem linearen aliphatischen Alkohol mit 1 bis 8 C-Atomen sowie 2-Ethylhexylalkohol oder einem Alkohol mit einem aromatischen Rest, ausgewählt aus 2-Phenoxyethanol, Phenylethanol, Phenylbutanol und Benzylalkohol sowie gewünschtenfalls von 0,5 bis 10 Gew.-% eines copolymerisierbaren, mehrfunktionellen, vernetzenden monomeren und

A2: 10 bis 90 Gew.-% mindestens eines Blocks aus einem oder mehreren Methacrylsäureestern mit einem Alkohol mit 1 bis 8 C-Atomen,

wobei jeder Block ein mittleres Molekulargewicht $M_n$ (Zahlenmittel) von 1000 bis 100.000 g/mol besitzt und der Quotient $M_w/M_n$ (Gewichtsmittel/Zahlenmittel) jedes Blocks kleiner als 2 ist, wie es durch Blockcopolymerisation nach dem Verfahren der Gruppentranferpolymerisation erhalten wird.

2. Formmasse, enthaltend, bezogen auf die Summe aus A, B und gegebenenfalls C:

A: 1 bis 99 Gew.-% eines Blockcopolymeren A nach Anspruch 1 und

B: 1 bis 99 Gew.-% eines Copolymeren B, aufgebaut aus 50 bis 95 Gew.-% Styrol, substituierten Styrols oder (Meth)acrylsäure-$(C_1$-$C_8)$-esters und 5 bis 50 Gew.-% mindestens eines weiteren Monomeren, ausgewählt aus der Gruppe, die umfaßt Acrylnitril, Methacrylnitril, N-alkyl- oder N-arylsubstituiertes Maleinimid, Maleinsäureanhydrid, Acrylsäure und Acrylamid
und gegebenenfalls

C: bis 98 Gew.-% eines Copolymeren oder Pfropfcopolymeren C aus, bezogen auf die Summe aus C1 und C2,

C1: 50 bis 100 Gew.-% eines Acrylatkautschuks C1

C2: bis 50 Gew.-% einer oder mehrerer gegebenenfalls auf C1 gepfropften Hüllen aus

C21: 35 bis 75 Gew.-% Styrol, eines substituierten Styrols oder eines (Meth)acrylsäureesters und

C22: 25 bis 65 Gew.-% Acrylnitril, Methacrylnitril, eines N-alkyl- oder N-arylsubstituierten Maleinimids, Maleinsäureanhydrid, Acrylsäure, Acrylamid oder eines (Meth)acrylsäureesters.

3. Verfahren zur Herstellung von Blockcopolymerisaten A nach Anspruch 1, dadurch gekennzeichnet, daß man einen oder mehrere Acrylsäureester A1 und einen oder mehrere Methacrylsäurester A2 nacheinander in an sich bekannter Weise der Gruppentransferpolymerisation unterwirft.

## Claims

1. A linear, star or dendrimeric block copolymer A, composed of

A1: from 10 to 90% by weight of at least one block of one or more acrylates of a linear aliphatic alcohol of 1 to 8 carbon atoms and 2-ethylhexyl alcohol or an alcohol having an aromatic radical, selected from 2-phenoxyethanol, phenylethanol, phenybutanol and benzyl alcohol and
A2: from 10 to 90% by weight of at least one block of one or more methacrylates of an alcohol of 1 to 8 carbon atoms,

each block having a number average molecular weight $M_n$ of from 1,000 to 100,000 g/mol and the quotient $M_w/M_n$ (weight average/number average) of each block being less than 2, as obtained by block copolymerization using the group transfer polymerization method.

2. A molding material containing, based on the sum of A and B, and, if required, C:

A: from 1 to 99% by weight of a block copolymer A as claimed in claim 1 and
B: from 1 to 99% by weight of a copolymer B composed of from 50 to 95% by weight of styrene, substituted styrene or $C_1$-$C_8$-alkyl (meth)acrylate and from 5 to 50% by weight of at least one further monomer selected from the group consisting of acrylonitrile, methacrylonitrile, N-alkyl- or N-aryl-substituted maleimide, maleic anhydride, acrylic acid and acrylamide,
and, if required,
C: up to 98% by weight of a copolymer or graft copolymer C of, based on the sum of C1 and C2,

C1: from 50 to 100% by weight of an acrylate rubber C1 and
C2: up to 50% by weight of one or more shells which may be grafted onto C1 and consist of

C21: from 35 to 75% by weight of styrene, a substituted styrene or a (meth)acrylate and
C22: from 25 to 65% by weight of acrylonitrile, methacrylonitrile, N-alkyl- or N-aryl-substituted maleimide, maleic anhydride, acrylic acid, acrylamide or (meth)acrylate.

3. A process for the preparation of a block copolymer A as claimed in claim 1, wherein one or more acrylates A1 and one or more methacrylates A2 are successively subjected to group transfer polymerization in a conventional manner.

**Revendications**

1. Copolymère séquencé A, linéaire, en forme d'étoile ou dendrimère, à base de

   A1 : 10 à 90% en poids d'au moins une séquence constituée par un ou plusieurs esters acryliques avec un alcool aliphatique linéaire contenant de 1 à 8 atomes de carbone ainsi qu'avec l'alcool 2-éthylhexylique ou avec un alcool contenant un radical aromatique, choisi parmi le 2-phénoxyéthanol, le phényléthanol, le phénylbutanol et l'alcool benzylique, ainsi que, le cas échéant, de 0,5 à 10% en poids d'un monomère de réticulation, polyfonctionnel, copolymérisable, et

   A2: 10 à 90% en poids d'au moins une séquence constituée par un ou plusieurs esters méthacryliques avec un alcool contenant de 1 à 8 atomes de carbone,

   dans lequel chaque séquence possède un poids moléculaire moyen $M_n$ (moyenne en nombre) de 1000 à 100.000 g/mole, et le quotient $M_w/M_n$ (moyenne en poids/moyenne en nombre) de chaque séquence est inférieur à 2, tel qu'on l'obtient par copolymérisation séquencée conformément au procédé de la polymérisation par transfert de groupes.

2. Matière à mouler contenant, rapportés à la somme de A, B et éventuellement C :

   A: de 1 à 99% en poids du copolymère séquencé A selon la revendication 1 et

   B: de 1 à 99% en poids d'un copolymère B à base de 50 à 95% en poids de styrène, de styrène substitué ou d'un ester en $C_1$-$C_8$ d'acide (méth)acrylique et de 5 à 50% an poids d'au moins un monomère supplémentaire choisi parmi le groupe qui comprend l'acrylonitrile, le méthacrylonitrile, le maléimide substitué pour N-alkyl- ou -aryl, l'anhydride maléique, l'acide acrylique et l'acrylamide, et éventuellement

   C: jusqu'à 98% en poids d'un copolymère ou d'un copolymère greffé C constitué par, rapportés à la somme de C1 et C2,

      C1: 50 à 100% en poids d'un caoutchouc d'acrylate C1

      C2: jusqu'à 50% en poids d'une ou de plusieurs enveloppes éventuellement greffées sur C1, constituées par

         C21 : de 35 à 75% en poids de styrène, d'un styrène substitué ou d'un ester (méth)acrylique et

         C22: de 25 à 65% en poids d'acrylonitrile, de méthacrylonitrile, de maléimide substitué pour N-alkyl- ou -aryl, d'anhydride maléique, d'acide acrylique, d'acrylamide ou d'un ester (méth)acrylique.

3. Procédé pour la préparation de copolymères séquences A selon la revendication 1, caractérisé en ce qu'on soumet un ou plusieurs esters acryliques A1 et un ou plusieurs esters méthacryliques A2, successivement, d'une manière connue en soi, à une polymérisation par transfert de groupes.